(19) Europäisches Patentamt
European Patent Office
Office européen des brevets

(11) Publication number : 0 466 481 A2

(12) EUROPEAN PATENT APPLICATION

(21) Application number : 91306269.1

(22) Date of filing : 10.07.91

(51) Int. Cl.$^5$ : C08L 67/02, C08K 5/06, C08K 5/3417, C08L 69/00, C08L 63/00, C08L 25/18

(30) Priority : 10.07.90 JP 180656/90
10.07.90 JP 180657/90
10.07.90 JP 180658/90

(43) Date of publication of application : 15.01.92 Bulletin 92/03

(84) Designated Contracting States : DE FR GB IT NL

(71) Applicant : TEIJIN LIMITED
6-7, Minamihonmachi 1-chome Chuo-ku
Osaka-shi Osaka 541 (JP)

(72) Inventor : Shimotsuma, Sakae
124-60, Tomuro
Atsugi-shi, Kanagawa (JP)
Inventor : Suzuoka, Akihiro
14-5, Enokigaoka, Midori-ku
Yokohama-shi, Kanagawa (JP)
Inventor : Hatayama, Toshio
2-11-11, Higashihashimoto
Sagamihara-shi, Kanagawa (JP)

(74) Representative : Arthur, Bryan Edward et al
Withers & Rogers 4 Dyer's Buildings Holborn
London EC1N 2JT (GB)

(54) **Flame retardant polyester resin composition.**

(57) A flame retardant polyester resin composition comprising :
(A) 30 to 99.5% by weight of a polybutylenenaphthalene dicarboxylate ;
(B) 0.5 to 25% by weight of at least one flame retardant selected from the group consisting of brominated bisphenol A type polycarbonate flame retardants, brominated epoxy flame retardants and brominated polystyrene flame retardants ; brominated diphenyl ether flame retardants, and brominated imide flame retardants ;
(C) 0 to 15% by weight of at least one flame retardant aid selected from the group consisting of $Sb_2O_3$ , $Sb_2O_5 \cdot nH_2O$ (n = 0 - 4) and $xNa_2O \cdot Sb_2O_5 \cdot yH_2O$ (x = 0 - 1, y = 0 - 4) ; and
(D) 0 to 50% by weight of an inorganic filler.



Jouve, 18, rue Saint-Denis, 75001 PARIS

## BACKGROUND OF THE INVENTION

### 1. Field of the Invention

The present invention relates to a flame retardant polyester resin composition having an excellent humid heat resistance and flame retardancy, and comprising a polybutylenenaphthalene dicarboxylate (hereinafter abbreviated as PBN, and sometimes called polybutylene naphthalate), a flame retardant, a flame retardant aid, and an inorganic filler.

### 2. Description of the Related Art

Generally speaking, a composition having a brominated bisphenol A type polycarbonate flame retardant, a flame retardant aid such as $Sb_2O_3$ , and an inorganic filler incorporated in a polybutylene terephthalate (hereinafter abbreviated as PBT) has an excellent flame retardancy, mechanical strength, electrical insulating property, and chemical resistance, and therefore, is frequently used for electrical and electronic parts, domestic illumination parts, parts for automobiles, and construction parts.

In the prior art, as the material for these parts, general purpose plastics such as polypropylene, or thermosetting resins such as phenol resin, have been employed, but PBT is now used as an alternative to these resins, due to a need for higher functions and performance, and an improvement of the moldability.

Recently, however, the need to use PBT molded parts under more severe environmental conditions of a high temperature and high humidity has increased, and the current flame retardant PBT composition does not have the quality demanded.

Generally, the humid heat resistance of PBT is inherently inferior to that of polyamides, because of the ester bond in the main chain, and attempts have been made to improve this humid heat resistance. As a measure for such improvement, the carboxyl group concentration of the PBT polymer terminals has been reduced, and as a means for reducing the terminal carboxyl group concentration, the solid phase polymerization method has been proposed. Also, the method of adding a compound having a functional group reactive with a carboxyl group such as an epoxy group or isocyanate group into PBT has been proposed.

Nevertheless, even the use of the thus improved PBT in this way does not provide a satisfactory improvement of the humid heat resistance in a composition containing a flame retardant, a flame retardant aid and an inorganic filler, and the strength is remarkably lowered after a hot water deterioration test. Accordingly, it is very probable that the life or reliability of the related part will be lowered.

Also, when a flame retardant or flame retardant aid is added to the PBT composition or to PBT and an inorganic filler, the corrosion of the screw, the barrel of the extruder or molding machine, and the mold becomes excessive. Further, the gas burning of the molding may be increased, or the strength and elongation, frequently lowered, and therefore, the amount added of such flame retardants is preferably as small as possible.

Further, with recent improvements of the functions of parts, the molded product has become smaller and thinner, and therefore, the resin composition must now have a higher flowability.

## SUMMARY OF THE INVENTION

Accordingly, the objects of the present invention are to eliminate the above-mentioned disadvantages of the prior art and to provide a flame retardant polyester resin composition having improved characteristics.

Other objects and advantages of the present invention will be apparent from the following description.

In accordance with the present invention, there is provided a flame retardant polyester resin composition comprising:

(A) 30 to 99.5% by weight of a polybutylenenaphthalane dicarboxylate;

(B) 0.5 to 25% by weight of at least one flame retardant selected from the group consisting of brominated bisphenol A type polycarbonate flame retardants, brominated epoxy flame retardants brominated polystyrene flame retardants, brominated diphenyl ether flame retardant, and brominated imide flame retardant;

(C) 0 to 15% by weight of at least one auxiliary flame retardant selected from the group consisting of $Sb_2O_3$ , $Sb_2O_5 \cdot nH_2O$ (n = 0 - 4) and $xNa_2O \cdot Sb_2O_5 \cdot yH_2O$ (x = 0 - 1, y = 0 - 4); and

(D) 0 to 50% by weight of an inorganic filler.

## DESCRIPTION OF THE PREFERRED EMBODIMENTS

The present invention will now be explained in further detail.

In the present invention, PBN denotes a polyester comprising a naphthalene dicarboxylic acid, preferably

naphthalene-2,6-dicarboxylic acid as the acid component, 1,4-butane diol as the glycol component; i.e., a polyester with all or most, generally 90 mole% or more, preferably 95 mole% or more, of the repeating units comprising butylene naphthalate.

The polyester also can be copolymerized with the following components within the range which does not damage the physical properties thereof. Namely, examples of the acid component include aromatic dicarboxylic acids other than naphthalene dicarboxylic acid, such as phthalic acid, isophthalic acid, terephthalic acid, diphenyl dicarboxylic acid, diphenyl ether dicarboxylic acid, diphenoxyethane dicarboxylic acid, diphenylmethane dicarboxylic acid, diphenylketone dicarboxylic acid, diphenylsulfide dicarboxylic acid, diphenylsulfone dicarboxylic acid; aliphatic dicarboxylic acids, such as succinic acid, adipic acid, sebacic acid, alicyclic dicarboxylic acids, such as cyclohexane dicarboxylic acid, tetralin dicarboxylic acid, and decaline dicarboxylic acid.

Examples of the glycol component include ethylene glycol, propylene glycol, trimethylene glycol, pentamethylene glycol, hexamethylene glycol, octamethylene glycol, neopentyl glycol, cyclohexane dimethanol, xylylene glycol, diethylene glycol, polyethylene glycol, bisphenol A, catechol, resorcinol, hydroquinone, dihydroxy diphenyl, dihydroxy diphenyl ether, dihydroxy diphenylmethane, dihydroxy diphenyl ketone, dihydroxy diphenylsulfide, and dihydroxy diphenylsulfone.

Examples of the oxycarboxylic acid component include oxybenzoic acid, hydroxynaphthoic acid, hydroxydiphenylcarboxylic acid, and ω-hydroxycaproic acid.

Also, within the range which will not substantially cause a loss of the molding performance of the polyester, a trifunctional or more compound, such as glycerine, trimethylpropane, pentaerythritol, trimellitic acid, and pyromellitic acid also may be copolymerized.

Such a polyester can be obtained by polycondensating a naphthalene dicarboxylic acid and/or its functional derivative and butylene glycol and/or its functional derivative, by a known method for preparing an aromatic polyester. The concentration of the terminal carboxyl group of the PBN to be used in the present invention is not particularly limited, but preferably is as small as possible.

The brominated bisphenol A type polycarbonate flame retardant usable in the present invention has the structure (I) shown below. The terminal structure is not particularly limited, but the structure of (II) having a 4-tert-butylphenyl group and the structure of (III) having a 2,4,6-tribromophenyl group can be used.

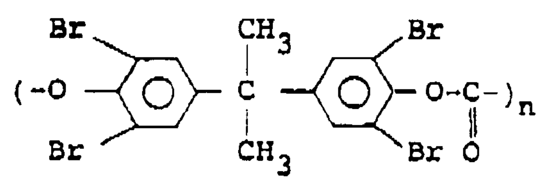

(n = 2 - 30)

(I)

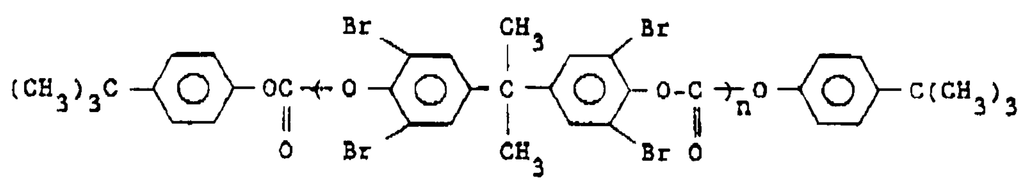

(n = 2 - 30) (II)

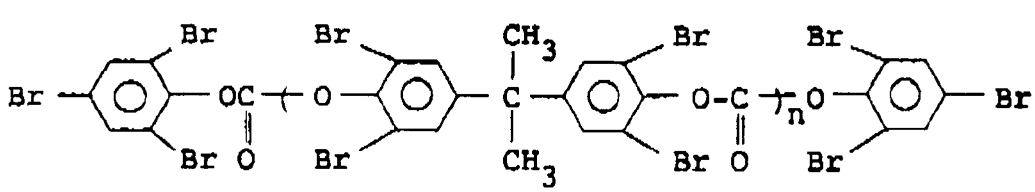

(n = 2 - 30) (III)

The brominated epoxy flame retardant (or brominated bisphenol A-containing epoxy resin flame retardant) usable in the present invention has the following structure (IV):

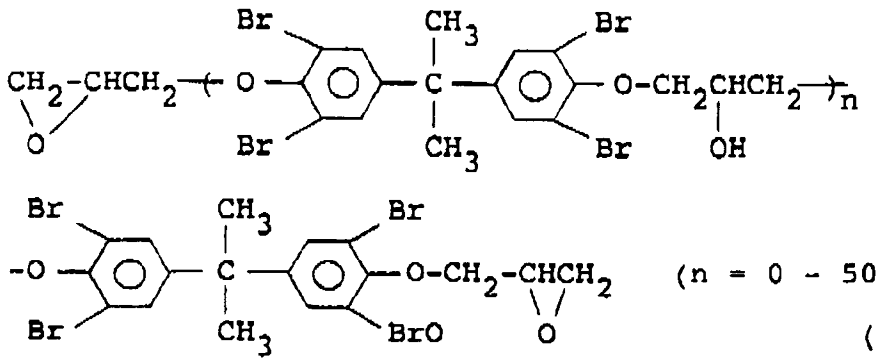

(n = 0 - 50)

(IV)

The brominated polystyrene flame retardant usable in the present invention has the following structure (V):

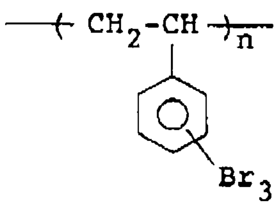

(n = 5 - 300) (V)

The brominated diphenyl ether flame retardant usable in the present invention has the following structure (VI):

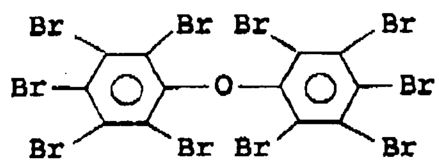

(VI)

The brominated imide flame retardant usable in the present invention has the following structure (VII):

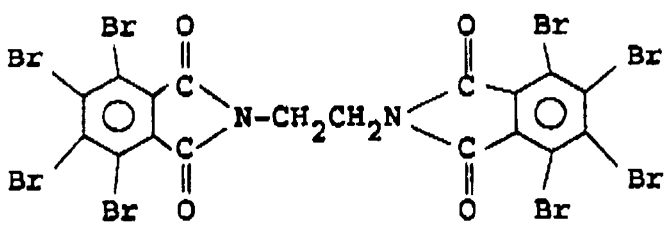

(VII)

These flame retardants may be used alone or in any mixture thereof.

The amount of the flame retardant added may be 0.5% to 25% by weight, preferably 3% to 20% by weight. When the amount of the inorganic filler in the total composition is larger, and a flame retardant aid such as $Sb_2O_3$ is used in combination, the amount of the flame retardant added can be made smaller, but even in such a case, a minimum amount of 0.5% by weight is required, as at an amount lower than that the flame retardance of the composition obtained will be poor. Conversely, when the amount is larger than 25% by weight, the dispersion of the flame retardant will be poor, and thus the extrudability or formability of the composition will be lowered, to thereby lower the strength of the molded product.

Next, the flame retardant aid selected from $Sb_2O_3$, $Sb_2O_5.nH_2O$ (n = 0 - 4) and $xNa_2O{\cdot}Sb_2O_5{\cdot}yH_2O$ (x = 0 - 1, y = 0 - 4) is preferably formulated, for an improvement of the flame retardant effect. The particle size is not particularly limited, but is preferably 0.02 to 5 μm. If necessary, the surface thereof may be treated with an epoxy compound, silane compound, isocyanate compound, and titanate compound. The amount of flame retardant aid added may be 0 to 15% by weight, preferably 1% to 10% by weight, but when no flame retardant has been added, a larger amount of the flame retardant aid must then be added, and therefore, it is preferable to add 20 to 70% by weight of a flame retardant aid based on the flame retardant. On the other hand, when the amount added is more than 15% by weight, a decomposition of the resin or the formulated agents may be accelerated,

to thus lower the strength of the molded product.

Next, the inorganic filler to be used in the present invention is preferably formulated, to thus obtain a molded product having an excellent mechanical strength, heat resistance, dimensional stability (resistance to distortion, warping), and electrical properties, and as this filler there may be employed a fibrous, powdery, or plate-shaped filler, depending on the purpose thereof.

Examples of fibrous fillers include inorganic fibrous materials such as glass fibers, carbon fibers, silica fibers, silica-alumina fibers, zirconia fibers, boron nitride fibers, silicon nitride fibers, boron fibers, potassium titanate fibers, further, fibrous materials of metals such as stainless steel, aluminum, titanium, copper, and brass. The particularly preferable fibrous fillers are glass fibers or carbon fibers.

Further, as the powdery fillers, there may be included carbon black, silica, quartz powder, glass beads, glass powder, calcium silicate, kaolin, talc, clay, diatomaceous earth, silicate such as wallastonite, oxides of metals such as iron oxide, titanium oxide, zinc oxide, alumina, carbonates of metals such as calcium carbonate, and barium carbonate, and alternatively, silicon carbide, silicon nitride, boron nitride, and various metal powders may be used.

As the plate-shaped filler, mica, glass flake, and various metal foils may be employed.

These inorganic fillers may be employed as one kind or as two or more kinds. The use of a fibrous filler, particularly glass fibers with a granular and/or plate-shaped filler in combination, is a preferable combination giving a high mechanical strength, good dimensional precision, and excellent electrical properties.

When using these fillers, if necesssary, preferably a sheafing agent or a surface treating agent is used. Examples thereof are functional compounds such as epoxy compounds, silane compounds, isocyanate compounds, and titanate compounds, and these compounds may be used by a previous application of surface treatment or sheafing treatment, or may be added during the preparation of the material.

In the present invention, the amount of inorganic filler added may be 0 to 50% by weight, preferably 5% to 45% by weight, based on the total composition. When the amount thereof is larger than 50% by weight, the dispersibility is poor, and thus the moldability becomes poor.

In the polyester resin composition of the present invention, to impart further desirable characteristics depending on the purpose, there may be also added other additives within the range which does not remarkably impair the physical properties thereof, including, for example, stabilizers, colorants, UV-ray absorbers, mold release agents, antistatic agents, crystallization accelerators, crystal nucleus agents, fillers, and impact improvers.

The composition of the present invention can be easily prepared by known equipment and methods generally employed for the preparation of the resin compositions of the prior art. For example, there can be used any one of (1) a method in which the respective components are mixed, melted, kneaded and extruded through an extruder to prepare pellets, and molded, (2) the method in which pellets of different compositions are prepared, the pellets are mixed in predetermined amounts and provided for molding, and after molding, a molded product with a desired composition is obtained, and (3) the method in which one or two or more of the respective components are charged directly into a molding machine. Also, an addition of a part of the resin components as a fine powder by mixing with other components is preferable, to ensure a uniform formulation of these components.

The flame retardant polyester resin composition comprising PBN of the present invention has a superior humid heat resistance, compared with the flame retardant polyester resin composition comprising PBT of the prior art. Also, it can be molded easily at a temperature of 250 to 300°C, at which PBT is generally molded, and surprisingly, has less burrs than PBT, even though less white powder is attached to the mold during a continuous molding. Accordingly, the flame retardant polyester composition comprising PBN not only has an excellent humid heat resistance, but also lowers the cleaning frequency of the white powder attached to the mold, and therefore, is a material giving a superior continuous productivity of molded products compared to that obtained with the flame retardant polyester resin composition comprising PBT.

## EXAMPLES

The present invention will now be further illustrated by, but is by no means limited to, the following Examples.

The methods of measuring the primary characteristics are described below.

(1) Terminal carboxyl group concentration (COOH):

Measured according to the method of A. Conix [Markromol. Chem. 26, 226 (1958)]. Unit is equivalent number per $10^6$ g (ton).

(2) Intrinsic viscosity:

Measured in o-chlorophenol solution at 35°C.

(3) Flame retardant test (UL-94):
According to Subject 94 of the Underlighters Laboratories (UL-94), the flame retardancy was tested by using 5 test strips (thickness 1/32 inch).
(4) Tensile strength:
According to ASTM D-638.
(5) Hot water deterioration test:
A hot water treatment of the tensile test strip was carried out at 100°C for 200 hours, followed by a measuring the strength of the test strip.
(6) Flowability:
According to ASTM D 1238, and measured at a cylinder temperature of 270°C under a load of 325 g. A higher flowability is exhibited as the numerical value becomes higher.

Example 1

To a PBN having an intrinsic viscosity of 0.79 and a terminal carboxyl group concentration of 40 equivalents/ton was added, a brominated bisphenol A type polycarbonate flame retardant having an average degree of polymerization of 17 in an amount of 16% by weight based on the total composition, and after dry blending, the mixture was pelletized by extrusion by a single screw extruder and showed a good extrudability. Further, the pellets were injection molded to prepare test pieces for a tensile test, and subjected to a hot water deterioration test. Also, test pieces for a combustion test were prepared and subjected to a combustion test. The results are shown in Table 1.

Comparative Example 1

Using the same PBN as in Example 1, without an addition of the flame retardant, pelletizing was performed by an extrusion by a single screw extruder. The remaining tests were conducted in the same manner as in Example 1. The extrudability was good.

Comparative Example 2

The tests were conducted in the same manner as in Example 1, except that 30% by weight of the flame retardant was added.

Comparative Example 3

The tests were conducted in the same manner as in Example 1, except that 20% by weight of the flame retardant and 20% by weight of $Sb_2O_3$ as the flame retardant aid were added.

From Table 1 and Table 21 below, it can be understood that the flame retardancy is low when the amount of the flame retardant added is smaller than 0.5% by weight. On the other hand, it can be moon from Table 1 that, when the amount of the flame retardant added is more than 25% by weight, or even when the flame retardant content is not higher than 25% by weight, when the flame retardant aid content is more than 15% by weight, the extrudability was poor and the strength of the molded product was low.

**Table 1**

| | Content | | Unit | Example 1 | Comp. Ex. 1 | Comp. Ex. 2 | Comp. Ex. 3 |
|---|---|---|---|---|---|---|---|
| Component | (A) Polymer | PBN | wt.% | 84.0 | 100.0 | 70.0 | 60.0 |
| | | Terminal COOH concentration | equivalent/ton | 40 | 40 | 40 | 40 |
| | (B) Brominated bisphenol A type polycarbonate | | wt.% | 16.0 | - | 30.0 | 20.0 |
| | (C) $Sb_2O_3$ | | - | - | - | - | 20.0 |
| Physical properties | Tensile strength | Before hot water deterioration | $kg/cm^2$ | 580 | 630 | 480 | 510 |
| | | After hot water deterioration | $kg/cm^2$ | 560 | 620 | 400 | 420 |
| | Combustibility test (UL-94) | | - | V-0 | HB | V-0 | V-0 |
| | Compound extrudability | | - | Good | Good | Poor | Poor |

Comparative Example 4

The tests were conducted in the same manner as in Example 1, except that a PBT with an intrinsic viscosity of 1.07 and a terminal carboxyl group concentration of 42 equivalents/ton was employed. The results are shown in Table 2.

Comparative Example 5

Because the flame retardance was V-2 in Comparative Example 4, the flame retardant was added in an increased amount of 28% by weight, to make it V-0. The remaining tests were conducted in the same manner as in Comparative Example 4, and the extrudability was poor.

Comparative Example 6

The tests were conducted in the same manner as in Example 5, except that a PBT with an intrinsic viscosity of 0.88 and a terminal carboxyl group concentration of 17 equivalents/ton was employed, and the extrudability was poor.

From Table 2, it can be seen that the flame retardant polyester resin composition comprising the PBN of the present invention has a higher flame retardance and humid heat resistance than the resin composition comprising the PBT with a similar composition. Conversely, if the amount of the flame retardant is increased, to bring the flame retardancy to the same level, the extrudability becomes poor. Further, even if a polymer with low terminal carboxyl group concentration is employed as the PBT, for an improvement of the humid heat resistance, a sufficient improvement could not be obtained. From the above, it can be clearly seen that the present flame retardant polyester resin composition has an excellent flame retardancy and humid heat resistance.

**Table 2**

| Content | | | Unit | Example 1 | Comp. Ex. 4 | Comp. Ex. 5 | Comp. Ex. 6 |
|---|---|---|---|---|---|---|---|
| Component | (A) Polymer | PBN | wt.% | 84.0 | - | - | - |
| | | PBT | ″ | - | 84.0 | 72.0 | 72.0 |
| | | Terminal COOH concentration | equivalent/ton | 40 | 42 | 42 | 17 |
| | (B) Brominated bisphenol A type polycarbonate | | wt.% | 16.0 | 16.0 | 28.0 | 28.0 |
| Physical properties | Tensile strength | Before hot water deterioration | $kg/cm^2$ | 580 | 600 | 540 | 540 |
| | | After hot water deterioration | $kg/cm^2$ | 560 | 200 | 180 | 420 |
| | Combustibility test (UL-94) | | - | V-0 | V-2 | V-0 | V-0 |
| | Compound extrudability | | - | Good | Good | Poor | Poor |

Example 2

To a PBN with an intrinsic viscosity of 0.79 and a terminal carboxyl group density of 40 equivalents/ton was added a brominated bisphenol A type polycarbonate flame retardant in an amount of 9% by weight based on the total composition. Further, as the flame retardant aid, 4.5% by weight of $Sb_2O_3$ was added. After dry blending, the mixture was pelletized by extrusion through a single screw extruder, and the extrudability thereof was good. The remaining tests were conducted in the same manner as in Example 1. The results are shown in Table 3.

Comparative Example 7

The same tests were conducted in the same manner as in Example 2, except that a PBT with an intrinsic viscosity of 1.07 and a terminal carboxyl group concentration of 42 equivalents/ton was used, and it was found that the extrudability was good.

Comparative Example 8

Because the flame retardancy was V-2 in Comparative Example 7, the flame retardant was added in an amount of 16% by weight, and the flame retardant aid in an amount of 8% by weight to make it V-0. The remaining tests were conducted in the same manner as in Comparative Example 7.

Comparative Example 9

The tests were conducted in the same manner as in Comparative Example 8, except that a PBT with an intrinsic viscosity of 0.88 and a terminal carboxyl group concentration of 17 equivalents/ton was employed. It was found that the extrudability was good.

From Table 3, even when no only the flame retardant but also $Sb_2O_3$ was employed as the flame retardant aid, the flame retardant polyester resin composition had a higher flame retardancy and humid heat resistance than the resin composition comprising PBT with a similar composition. Also, even when a PBT with lower terminal carboxyl group concentration was employed with an increased amount of the flame retardant, for an improvement of the flame retardancy and humid heat resistance, a sufficient improvement could not be obtained. From the above, it can be clearly seen that the flame retardant polyester resin composition of the present invention has an excellent flame retardance and humid heat resistance.

Table 3

| | | | Content | Unit | Example 2 | Comp. Ex. 7 | Comp. Ex. 8 | Comp. Ex. 9 |
|---|---|---|---|---|---|---|---|---|
| Component | (A) Polymer | PBN | | wt.% | 86.5 | - | - | - |
| | | PBT | | " | - | 86.5 | 76.0 | 76.0 |
| | | Terminal COOH concentration | | equivalent/ ton | 40 | 42 | 42 | 17 |
| | (B) Brominated bisphenol A type polycarbonate | | | wt.% | 9.0 | 9.0 | 16.0 | 16.0 |
| | (C) $Sb_2O_3$ | | | " | 4.5 | 4.5 | 8.0 | 8.0 |
| Physical properties | Tensile strength | Before hot water deterioration | | $kg/cm^2$ | 590 | 600 | 610 | 600 |
| | | After hot water deterioration | | $kg/cm^2$ | 570 | 180 | 190 | 450 |
| | Combustibility test (UL-94) | | | - | V-0 | V-2 | V-0 | V-0 |
| | Compound extrudability | | | - | Good | Good | Good | Good |

Example 3

To a PBN having an intrinsic viscosity of 0.79 and a terminal carboxyl group concentration of 40 equivalents/ton was added a brominated bisphenol A type polycarbonate flame retardant having an average degree of polymerisation of 17 in an amount of 10% by weight based on the total composition. Further, as the flame retardant aid, $Sb_2O_5$ was added in an amount of 5% by weight. After dry blending, the mixture was pelletized by extrusion through a single screw extruder, and showed a good extrudability. The remaining experiments were conducted in the same manner as in Example 1. The results are shown in Table 4.

Comparative Example 10

The tests were conducted in the same manner as in Example 3, except that a PBT with an intrinsic viscosity of 1.07 and a terminal carboxyl group concentration of 42 equivalents/ton was employed, and it was found that the extrudability was good.

Comparative Example 11

Because the flame retardancy was V-2 in Comparative Example 10, the flame retardant was added in an amount of 16% by weight and the flame retardant aid added in an amount of 8% by weight, to make it V-0. The remaining tests were conducted in the same manner as in Comparative Example 10, and it was found that the extrudability was good.

Comparative Example 12

The tests were conducted in the same manner as in comparative Example 11, except that a PBT with an intrinsic viscosity of 0.88 and a terminal carboxyl group concentration of 17 equivalents/ton was employed, and it was found that the extrudability was good.

From Table 4, it can be seen that not only in the case of using $Sb_2O_3$ as the flame retardant aid, but also in the case of using $Sb_2O_5$, the flame retardant polyester resin composition comprising the PBN of the present invention has a higher flame retardancy and humid heat resistance than the resin composition comprising the PBT with a similar composition. Also, even if the amount of the flame retardant is increased and a PBT with a lower terminal carboxyl group concentration employed, to improve the flame retardance and humid heat resistance, a sufficient improvement could not be obtained. From the above, it can be clearly seen that the flame retardant polyester resin composition has an excellent flame retardancy and humid heat resistance.

Table 4

| | | | Unit | Example 3 | Comp. Ex. 10 | Comp. Ex. 11 | Comp. Ex. 12 |
|---|---|---|---|---|---|---|---|
| Component | (A) Polymer | PBN | wt.% | 85.0 | - | - | - |
| | | PBT | " | - | 85.0 | 76.0 | 76.0 |
| | | Terminal COOH concentration | equivalent/ton | 40 | 42 | 42 | 17 |
| | (B) Brominated bisphenol A type polycarbonate | | wt.% | 10.0 | 10.0 | 16.0 | 16.0 |
| | (C) $Sb_2O_3$ | | " | 5.0 | 5.0 | 8.0 | 8.0 |
| Physical properties | Tensile strength | Before hot water deterioration | $kg/cm^2$ | 590 | 600 | 610 | 600 |
| | | After hot water deterioration | $kg/cm^2$ | 570 | 180 | 190 | 450 |
| | Combustibility test (UL-94) | | - | V-0 | V-2 | V-0 | V-0 |
| | Compound extrudability | | - | Good | Good | Good | Good |

Example 4

To a PBN having an intrinsic viscosity of 0.79 and a terminal carboxyl group concentration of 40 equivalents/ton west added glass chopped strands with a diameter of 10 μm and a length of 3 mm in an amount of 30% by weight based on the total composition. A brominated bisphenol A type polycarbonate flame retardant having an average degree of polymerization of 17 was then added in an amount of 7% by weight, and further, as the flame retardant aid, 3.5% by weight of $Sb_2O_3$ was added. After dry blending, two mixture was pelletized by extrusion through a single screw extruder, and should a good extrudability. The other tests were conducted as in Example 1. The results are shown in Table 5.

Comparative Example 13

The tests were conducted in the same manner as in Example 4, except that a PBT with an intrinsic viscosity of 1.07 and a terminal carboxyl group concentration of 42 equivalents/ton was employed, and it was found that the extrudability was good.

Comparative Example 14

Because the flame retardancy was V-2 in Comparative Example 13, 10% by weight of the flame retardant and 5% by weight of the flame retardant aid were added to make it V-0. The remaining tests were conducted in the same manner as in Comparative Example 13. It was found that the extrudability was good.

Comparative Example 15

The tests were conducted in the same manner as in Comparative Example 14, except that a PBT with an intrinsic viscosity of 0.88 and a terminal carboxyl group concentration of 17 equivalents/ton was employed, and it was found that the extrudability was good.

Comparative Example 16

The tests were conducted in the same manner as in Example 4, except that 55% by weight of glass fibers, 4% by weight of the flame retardant, and 2% by weight of the flame retardant aid were added. It was found that the extrudability was poor.

From Table 5, it can be understood that the flame retardant polyester resin composition comprising the PBN of the present invention has a higher flame retardancy and humid heat resistance than the resin composition comprising the PBT with a similar composition, even when glass fibers are used as the inorganic filler. Also, even when the amount of flame retardant added is increased, and a PBT with lower terminal carboxyl group concentration employed to improve the flame retardancy and humid heat resistance, a sufficient improvement could not be obtained. From the above, the flame retardant polyester resin composition of the present invention clearly has an excellent flame retardancy and humid heat resistance.

The amount of glass fibers added must not be more than 50% by weight, as the extrudability will become poor if the glass fibers are added in an amount exceeding 50% by weight, as the inorganic filler.

Table 5

| Content | | | Unit | Example 4 | Comp. Ex. 13 | Comp. Ex. 14 | Comp. Ex. 15 | Comp. Ex. 16 |
|---|---|---|---|---|---|---|---|---|
| Component | (A) Polymer | PBN | wt.% | 59.0 | - | - | - | 39.0 |
| | | PBT | " | - | 59.5 | 55.0 | 55.0 | - |
| | | Terminal COOH concentration | equivalent/ton | 40 | 42 | 42 | 17 | 40 |
| | (B) Brominated bisphenol A type polycarbonate | | wt.% | 7.0 | 7.0 | 10.0 | 10.0 | 4.0 |
| | (C) $Sb_2O_3$ | | " | 3.5 | 3.5 | 5.0 | 5.0 | 2.0 |
| | (D) Glass fiber | | " | 30.0 | 30.0 | 30.0 | 30.0 | 55.0 |
| Physical properties | Tensile strength | Before hot water deterioration | $kg/cm^2$ | 1570 | 1560 | 1560 | 1570 | 2100 |
| | | After hot water deterioration | $kg/cm^2$ | 1540 | 500 | 520 | 1150 | 1990 |
| | Combustibility test (UL-94) | | - | V-0 | V-2 | V-0 | V-0 | V-0 |
| | Compound extrudability | | - | Good | Good | Good | Good | Poor |

Example 5

To a PBN having an intrinsic viscosity of 0.79 and a terminal carboxyl group concentration of 40 equivalents/ton was added a brominated epoxy flame retardant having an average degree of polymerization of 15 in an amount of 16% by weight based on the total composition, and after dry blending, the mixture was pelletized by extrusion by a single screw extruder and showed a good extrudability. Further, the pellets were injection molded to prepare test pieces for a tensile test, and subjected to a hot water deterioration test. Also, similar test pieces for a combustion test were prepared, and subjected to the combustion test. The results are shown in Table 6.

Comparative Example 17

Using the same PBN as in Example 5, without an addition of the flame retardant, the pelletizing was performed by an extrusion by a single screw extruder. The remaining tests were conducted in the same manner as in Example 5. It was found that the extrudability was good.

Comparative Example 18

The tests were conducted in the same manner as in Example 5, except that 30% by weight of the flame retardant was added.

Comparative Example 19

The tests were conducted in the same manner as in Example 5, except that 20% by weight of the flame retardant and 20% by weight of $Sb_2O_3$ as the flame retardant aid were added.

From Table 6, it can be understood that the flame retardancy of PBN is low when the amount of the flame retardant added in smaller than 0.5% by weight. Further, it has been found that, when the amount of the flame retardant added is more than 25% by weight, or even when the flame retardant content is not higher than 25% by weight, if the flame retardant aid content is more than 15% by weight, the extrudability is poor and the strength of the molded product is low.

Table 6

| Content | | | Unit | Example 5 | Comp. Ex. 17 | Comp. Ex. 18 | Comp. Ex. 19 |
|---|---|---|---|---|---|---|---|
| Component | (A) Polymer | PBN | wt.% | 84.0 | 100.0 | 70.0 | 60.0 |
| | | Terminal COOH concentration | equivalent/ton | 40 | 40 | 40 | 40 |
| | (B) Brominated epoxy | | wt.% | 16.0 | - | 30.0 | 20.0 |
| | (C) $Sb_2O_3$ | | " | - | - | - | 20.0 |
| Physical properties | Tensile strength | Before hot water deterioration | $kg/cm^2$ | 560 | 630 | 460 | 510 |
| | | After hot water deterioration | $kg/cm^2$ | 540 | 620 | 410 | 430 |
| | Combustibility test (UL-94) | | - | V-0 | HB | V-0 | V-0 |
| | Compound extrudability | | - | Good | Good | Poor | Poor |

Comparative Example 20

The tests were conducted in the same manner as in Example 5, except that a PBT having an intrinsic viscosity of 1.07 and a terminal carboxyl group concentration of 42 equivalents/ton was employed. The results are shown in Table 7.

Comparative Example 21

Because the flame retardance was V-2 in Comparative Example 20, the flame retardant was added in an increased amount of 28% by weight, to make it V-0. The remaining tests were conducted in the same manner as in Comparative Example 20, and it was found that the extrudability was poor.

Comparative Example 22

The tests were conducted in the same manner as in Comparative Example 21, except that a PBT with an intrinsic viscosity of 0.88 and a terminal carboxyl group concentration of 17 equivalents/ton was employed, and it was found that the extrudability was poor.

From Table 7, it can be seen that the flame retardant polyester resin composition comprising the PBN of the present invention has a higher flame retardance and humid heat resistance than the resin composition comprising the PBT with a similar composition. Conversely, if the amount of flame retardant is increased, to bring the flame retardancy to the same level, the extrudability becomes poor. Further, even if a polymer with low terminal carboxyl group concentration was employed as the PBT, for an improvement of the humid heat resistance, a sufficient improvement could not be obtained. From the above, it can be clearly seen that the flame retardant polyester resin composition has an excellent flame retardancy and humid heat resistance.

Table 7

| Content | | | Unit | Example 5 | Comp. Ex. 20 | Comp. Ex. 21 | Comp. Ex. 22 |
|---|---|---|---|---|---|---|---|
| Component | (A) Polymer | PBN | wt.% | 84.0 | - | - | - |
| | | PBT | " | - | 84.0 | 72.0 | 72.0 |
| | | Terminal COOH concentration | equivalent/ton | 40 | 42 | 42 | 17 |
| | (B) Brominated epoxy | | wt.% | 16.0 | 16.0 | 28.0 | 28.0 |
| Physical properties | Tensile strength | Before hot water deterioration | $kg/cm^2$ | 560 | 580 | 560 | 540 |
| | | After hot water deterioration | $kg/cm^2$ | 540 | 200 | 180 | 410 |
| | Combustibility test (UL-94) | | - | V-0 | V-2 | V-0 | V-0 |
| | Compound extrudability | | - | Good | Good | Poor | Poor |

Example 6

To a PBN having an intrinsic viscosity of 0.79 and a terminal carboxyl group density of 40 equivalents/ton was added a brominated epoxy polycarbonate flame retardant having an average degree of polymerization of 15 in an amount of 9% by weight based on the total composition. Further, as the flame retardant aid, 4.5% by weight of $Sb_2O_3$ was added. After dry blending, the mixture was pelletized by extrusion through a single screw extruder, and showed a good extrudability. The other tests were conducted in the same manner as in Example 5. The results are shown in Table 8.

Comparative Example 23

The same tests were conducted in the same manner as in Example 6, except that a PBT with an intrinsic viscosity of 1.07 and a terminal carboxyl group concentration of 42 equivalents/ton was used, and it was found that the extrudability was good.

Comparative Example 24

Because the flame retardancy was V-2 in Comparative Example 23, the flame retardant was added in an amount of 16% by weight, and the flame retardant aid added in an amount of 8% by weight in order to make it V-0. The remaining tests were conducted in the same manner as in Comparative Example 23.

Comparative Example 25

The tests were conducted in the same manner as in Comparative Example 24, except that a PBT with an intrinsic viscosity of 0.88 and a terminal carboxyl group concentration of 17 equivalents/ton was employed, and it was found that the extrudability was good.

From Table 8, even when not only the flame retardant but also $Sb_2O_3$ was employed as the flame retardant aid, the flame retardant polyester resin composition has a higher flame retardancy and humid heat resistance than the resin composition comprising PBT with a similar composition. Also, even when a PBT with a lower terminal carboxyl group concentration is employed, with an increased amount of the flame retardant, for an improvement of the flame retardancy and humid heat resistance, a sufficient improvement could not be obtained. From the above, it can be clearly seen that the flame retardant polyester resin composition of the present invention has an excellent flame retardance and humid heat resistance.

Table 8

| Content | | | Unit | Example 6 | Comp. Ex. 23 | Comp. Ex. 24 | Comp. Ex. 25 |
|---|---|---|---|---|---|---|---|
| Component | (A) Polymer | PBN | wt.% | 86.5 | - | - | - |
| | | PBT | " | - | 86.5 | 76.0 | 76.0 |
| | | Terminal COOH A concentration | equivalent/ton | 40 | 42 | 42 | 17 |
| | (B) Brominated epoxy | | wt.% | 9.0 | 9.0 | 16.0 | 16.0 |
| | (C) $Sb_2O_3$ | | " | 4.5 | 4.5 | 8.0 | 8.0 |
| Physical properties | Tensile strength | Before hot water deterioration | $kg/cm^2$ | 590 | 600 | 610 | 600 |
| | | After hot water deterioration | $kg/cm^2$ | 570 | 180 | 190 | 450 |
| | Combustibility test (UL-94) | | - | V-0 | V-2 | V-0 | V-0 |
| | Compound extrudability | | - | Good | Good | Good | Good |

Example 7

To a PBN having an intrinsic viscosity of 0.79 and a terminal carboxyl group concentration of 40 equivalents/ton was added a brominated epoxy flame retardant having an average degree of polymerization of 15 in an amount of 10% by weight based on the total composition. Further, as the flame retardant aid, $Sb_2O_5$ was added in an amount of 5% by weight. After dry blending, the mixture was pelletized by extrusion through a single screw extruder, and showed a good extrudability. The other experiments were conducted in the same manner as in Example 5. The results are shown in Table 9.

Comparative Example 26

The tests were conducted in the same manner as in Example 7, except that a PBT with an intrinsic viscosity of 1.07 and a terminal carboxyl group concentration of 42 equivalents/ton was employed, and it was found that the extrudability was good.

Comparative Example 27

Because the flame retardancy was V-2 in Comparative Example 26, the flame retardant was added in an amount of 16% by weight and the flame retardant aid added in an amount of 8% by weight, to make it V-0. The remaining tests were conducted in the name manner as in comparative Example 26, and it was found that the extrudability was good.

Comparative Example 28

The tests were conducted in the same manner as in Comparative Example 27, except that a PBT with an intrinsic viscosity of 0.88 and a terminal carboxyl group concentration of 17 equivalents/ton was employed, and it was found that the extrudability was good.

From Table 9, it can be seen that, not only in the case of using $Sb_2O_3$ as the flame retardant aid, but also in the case of using $Sb_2O_5$ , the flame retardant polyester resin composition comprising the PBN of the present invention has a higher flame retardancy and humid heat resistance than the resin composition comprising the PBT with a similar composition. Also, even if the amount of the flame retardant is increased, and a PBT with a lower terminal carboxyl group concentration employed to improve the flame retardance and humid heat resistance, a sufficient improvement could not be obtained. From the above, it can be clearly seen that the flame retardant polyester resin composition has an excellent flame retardancy and humid heat resistance.

Table 9

| Content | | | Unit | Example 7 | Comp. Ex. 26 | Comp. Ex. 27 | Comp. Ex. 28 |
|---|---|---|---|---|---|---|---|
| Component | (A) Polymer | PBN | wt.% | 85.0 | - | - | - |
| | | PBT | " | - | 85.0 | 76.0 | 76.0 |
| | | Terminal COOH concentration | equivalent/ton | 40 | 42 | 42 | 17 |
| | (B) Brominated epoxy | | wt.% | 10.0 | 10.0 | 16.0 | 16.0 |
| | (C) $Sb_2O_3$ | | " | 5.0 | 5.0 | 8.0 | 8.0 |
| Physical properties | Tensile strength | Before hot water deterioration | $kg/cm^2$ | 590 | 600 | 610 | 610 |
| | | After hot water deterioration | $kg/cm^2$ | 560 | 140 | 150 | 420 |
| | Combustibility test (UL-94) | | - | V-0 | V-2 | V-0 | V-0 |
| | Compound extrudability | | - | Good | Good | Good | Good |

Example 8

The tests were conducted in the same manner as in Example 7, except for using 5.5% by weight of $Sb_2O_5 \cdot 2H_2O$ as the flame retardant, and the extrudability was good. The results are shown in Table 10.

Example 9

The tests were conducted in the same manner as in Example 7, except for using 6% by weight of 0.5 $Na_2O \cdot Sb_2O_5$ as the flame retardant, and the extrudability was good.

Example 10

The tests were conducted in the same manner as in Example 7, except for using 6% by weight of 0.75 $Na_2O \cdot Sb_2O_5$ as the flame retardant, and the extrudability was good.

Example 11

The tests were conducted in the same manner as in Example 7, except for using 6.5% by weight of $Na_2O \cdot Sb_2O_5$ as the flame retardant, and the extrudability was good.

From Table 10, it can be understood that not only when $Sb_2O_5$ was employed, but also when a compound of $xNa_2O \cdot Sb_2O_5 \cdot yH_2O$ (x = 0 - 1, y = 0 - 4) was employed, the flame retardant polyester resin composition had an excellent flame retardancy and humid heat resistance.

Table 10

| Content | | | Unit | Example 7 | Example 8 | Example 9 | Example 10 | Example 11 |
|---|---|---|---|---|---|---|---|---|
| Component | (A) Polymer | PBN | wt.% | 85.0 | 84.5 | 84.0 | 84.0 | 83.5 |
| | | Terminal COOH concentration | equivalent/ton | 40 | 40 | 40 | 40 | 40 |
| | (B) Brominated epoxy | | wt.% | 10.0 | 10.0 | 10.0 | 10.0 | 10.0 |
| | (C) $xNa_2O \cdot Sb_2O_5 \cdot yH_2O$ x = 0 - 1, y = 0 - 4 | | " | $Sb_2O_5$ 5.0 | $Sb_2O_5 \cdot 2H_2O$ 5.5 | $0.5Na_2O \cdot Sb_2O_5$ 6.0 | $0.75Na_2O \cdot Sb_2O_5$ 6.0 | $Na_2O \cdot Sb_2O_5$ 6.5 |
| Physical properties | Tensile strength | Before hot water deterioration | $kg/cm^2$ | 590 | 580 | 580 | 590 | 600 |
| | | After hot water deterioration | $kg/cm^2$ | 560 | 550 | 540 | 550 | 550 |
| | Combustibility test (UL-94) | | - | V-0 | V-0 | V-0 | V-0 | V-0 |
| | Compound extrudability | | - | Good | Good | Good | Good | Good |

Example 12

To a PBN having an intrinsic viscosity of 0.79 and a terminal carboxyl group concentration of 40 equivalents/ton were added glass chopped strands with a diameter of 10 μm and a length of 3 mm in an amount of 30% by weight based on the total composition. Also, a brominated epoxy flame retardant having an average degree of polymerization of 15 was added in an amount of 7% by weight. Further, as the flame retardant aid, 3.5% by weight of $Sb_2O_3$ was added. After dry blending, the mixture was pelletized by extrusion through a single screw extruder, and showed a good extrudability. The other tests were conducted similarly as in Example 5. The results are shown in Table 11.

Comparative Example 29

The tests were conducted in the same manner as in Example 12, except that a PBT having an intrinsic viscosity of 1.07 and a terminal carboxyl group concentration of 42 equivalents/ton was employed, and the extrudability was good.

Comparative Example 30

Because the flame retardancy was V-2 in Comparative Example 29, 10% by weight of the flame retardant and 5% by weight of the flame retardant aid were added in order to make it V-0. The remaining tests were conducted in the same manner as in Comparative Example 29, and it was found that the extrudability was good.

Comparative Example 31

The tests were conducted in the same manner as in Comparative Example 30, except that a PBT having an intrinsic viscosity of 0.88 and a terminal carboxyl group concentration of 17 equivalents/ton was employed, and the extrudability was good.

Comparative Example 32

The tests were conducted in the same manner as in Example 12, except that 55% by weight of glass fibers, 4% by weight of the flame retardant and 2% by weight of the flame retardant aid were added, and the extrudability was found to be poor.

From Table 11, it can be understood that the flame retardant polyester resin composition comprising the PBN of the present invention has a higher flame retardancy and humid heat resistance than the resin composition comprising the PBT with a similar composition, even when glass fibers are used as the inorganic filler. Also, even when the amount of flame retardant added is increased and a PBT with a lower terminal carboxyl group concentration employed to improve the flame retardancy and humid heat resistance, a sufficient improvement could not be obtained. From the above, it is clear that the flame retardant polyester resin composition of the present invention has an excellent flame retardancy and humid heat resistance.

The amount of the glass fibers added must not be more than 50% by weight, because the extrudability will become poor if the glass fibers are added in an amount exceeding 50% by weight, as the inorganic filler.

Table 11

| Content | | | Unit | Example 12 | Comp. Ex. 29 | Comp. Ex. 30 | Comp. Ex. 31 | Comp. Ex. 32 |
|---|---|---|---|---|---|---|---|---|
| Component | (A) Polymer | PBN | wt.% | 59.0 | - | - | - | 39.0 |
| | | PBT | " | - | 59.5 | 55.0 | 55.0 | - |
| | | Terminal COOH concentration | equivalent/ton | 40 | 42 | 42 | 17 | 40 |
| | (B) Brominated epoxy | | wt.% | 7.0 | 7.0 | 10.0 | 10.0 | 4.0 |
| | (C) $Sb_2O_3$ | | " | 3.5 | 3.5 | 5.0 | 5.0 | 2.0 |
| | (D) Glass fiber | | " | 30.0 | 30.0 | 30.0 | 30.0 | 55.0 |
| Physical properties | Tensile strength | Before hot water deterioration | $kg/cm^2$ | 1570 | 1540 | 1560 | 1580 | 2000 |
| | | After hot water deterioration | $kg/cm^2$ | 1550 | 480 | 500 | 1200 | 1910 |
| | Combustibility test (UL-94) | | - | V-0 | V-2 | V-0 | V-0 | V-0 |
| | Compound extrudability | | - | Good | Good | Good | Good | Poor |

Comparative Example 33

The tests were conducted in the same manner as in Example 6, except for using 9% by weight of a brominated bisphenol A type polycarbonate having an average degree of polymerization of 17 as the flame retardant, and the extrudability was good. The results are shown in Table 12.

From Table 12, compared with when a brominated bisphenol A type polycarbonate is employed as the flame retardant, it can be seen that the flowability is higher when a brominate epoxy is employed as in the present invention. Accordingly, the flame retardant polyester resin composition of the present invention has an excellent flame retardancy and humid heat resistance, and flowability, and thus is a composition particularly suitable for small thin parts.

Table 12

| | | Content | Unit | Example 6 | Comp. Ex. 33 |
|---|---|---|---|---|---|
| Component | (A) Polymer | PBN | wt.% | 86.5 | 86.5 |
| | | Terminal COOH concentration | equivalent/ton | 40 | 40 |
| | (B) Flame retardant | Brominated epoxy | wt.% | 9.0 | - |
| | | Brominated polycarbonate | " | - | 9.0 |
| | (C) $Sb_2O_3$ | | " | 4.5 | 4.5 |
| Physical properties | Melt flow rate | | g/10 | 8.0 | 4.6 |
| | Tensile strength | Before hot water deterioration | $kg/cm^2$ | 590 | 610 |
| | | After hot water deterioration | $kg/cm^2$ | 580 | 580 |
| | Combustibility test (UL-94) | | - | V-0 | V-0 |
| | Compound extrudability | | - | Good | Good |

Example 7

To a PBN having a intrinsic viscosity of 0.79 and a terminal carboxyl group concentration of 40 equivalents/ton was added a brominated polystyrene flame retardant having an average degree of polymerization of 880 in an amount of 12% by weight based on the total composition, and after dry blending, the mixture was pelletized by extrusion by a single screw extruder and showed a good extrudability. Further, the pellets were injection molded to prepare test pieces for a tensile test, and subjected to a hot water deterioration test. Also, similar test pieces for a combustion test were prepared and subjected to the combustion test. The results are shown in Table 13.

Comparative Example 34

Using the same PBN as in Example 7, without an addition of the flame retardant, pelletizing was performed by an extrusion by a single screw extruder. The remaining tests were conducted in the same manner as in Example 7, and the extrudability was found to be good.

Comparative Example 35

The tests were conducted in the same manner as in Example 7, except that 30% by weight of the flame retardant was added.

Comparative Example 36

The tests were conducted in the same manner as in Example 7, except that 20% by weight of the flame retardant, and 20% by weight of $Sb_2O_3$ as the flame retardant aid, were added.

From Table 13, it can be understood that the flame retardancy is low when the amount of the flame retardant added is smaller than 0.5% by weight. Further, it can be seen that, when the amount of flame retardant added is more than 25% by weight, or even when the flame retardant content is not higher than 25% by weight, if the flame retardant aid content is more than 15% by weight, the extrudabillty was poor and the strength of the molded product was low.

Table 13

| Content | | | Unit | Example 7 | Comp. Ex. 34 | Comp. Ex. 35 | Comp. Ex. 36 |
|---|---|---|---|---|---|---|---|
| Component | (A) Polymer | PBN | wt.% | 88.0 | 100.0 | 70.0 | 60.0 |
| | | Terminal COOH concentration | equivalent/ton | 40 | 40 | 40 | 40 |
| | (B) Brominated polystyrene | | wt.% | 12.0 | - | 30.0 | 20.0 |
| | (C) $Sb_2O_3$ | | ″ | - | - | - | 20.0 |
| Physical properties | Tensile strength | Before hot water deterioration | $kg/cm^2$ | 570 | 630 | 460 | 460 |
| | | After hot water deterioration | $kg/cm^2$ | 550 | 620 | 470 | 400 |
| | Combustibility test (UL-94) | | - | V-0 | HB | V-0 | V-0 |
| | Compound extrudability | | - | Good | Good | Poor | Poor |

Comparative Example 37

The tests were conducted in the same manner as in Example 7, except that a PBT having an intrinsic viscosity of 1.07 and a terminal carboxyl group concentration of 42 equivalents/ton was employed. The results are shown in Table 14.

Comparative Example 38

Because the flame retardance was V-2 in Comparative Example 37, the flame retardant was added in an increased amount of 18% by weight, to make it V-0. The remaining tests were conducted in the same manner as in Comparative Example 37, and it was found that the extrudability was poor.

Comparative Example 39

The tests were conducted in the same manner as in Comparative Example 38, except that a PBT with an intrinsic viscosity of 0.88 and a terminal carboxyl group concentration of 17 equivalents/ton was employed, and the extrudability was found to be poor.

From Table 14, it can be seen that the flame retardant polyester resin composition comprising the PBN of the present invention has a higher flame retardance and humid heat resistance than the resin composition comprising the PBT with a similar composition. Also, if the amount of flame retardant is increased to bring the flame retardancy to the same level, the extrudability becomes poor. Further, even if a polymer with a low terminal carboxyl group concentration was employed as the PBT, for an improvement of the humid heat resistance, a sufficient improvement could not be obtained. From the above, it can be clearly seen that the flame retardant polyester resin composition has an excellent flame retardancy and humid heat resistance.

Table 14

| Content | | | Unit | Example 7 | Comp. Ex. 37 | Comp. Ex. 38 | Comp. Ex. 39 |
|---|---|---|---|---|---|---|---|
| Component | (A) Polymer | PBN | wt.% | 88.0 | - | - | - |
| | | PBT | " | - | 88.0 | 82.0 | 82.0 |
| | | Terminal COOH concentration | equivalent/ton | 40 | 42 | 42 | 17 |
| | (B) Brominated polystyrene | | wt.% | 12.0 | 12.0 | 18.0 | 18.0 |
| Physical properties | Tensile strength | Before hot water deterioration | $kg/cm^2$ | 570 | 570 | 560 | 560 |
| | | After hot water deterioration | $kg/cm^2$ | 550 | 210 | 190 | 410 |
| | Combustibility test (UL-94) | | - | V-0 | V-2 | V-0 | V-0 |
| | Compound extrudability | | - | Good | Good | Poor | Poor |

Example 8

To a PBN having an intrinsic viscosity of 0.79 and a terminal carboxyl group density of 40 equivalents/ton was added a brominated polystyrene flame retardant having an average degree of polymerization of 880 in an amount of 8% by weight based on the total composition. Further, as the flame retardant aid, 4% by weight of $Sb_2O_3$ was added. After dry blending, the mixture was pelletized by extrusion through a single screw extruder, and showed a good extrudability. The other tests were conducted in the same manner as in Example 8. The results are shown in Table 15.

Comparative Example 40

The same tests were conducted in the same manner as in Example 8, except that a PBT having an intrinsic viscosity of 1.07 and a terminal carboxyl group concentration of 42 equivalents/ton was used, and the extrudability was good.

Comparative Example 41

Because the flame retardancy was V-2 in Comparative Example 40, the flame retardant was added in an amount of 11% by weight, and the flame retardant aid added in an amount of 5.5% by weight. The remaining tests were conducted in the same manner as in Comparative Example 40.

Comparative Example 42

The tests were conducted in the same manner as in Comparative Example 41, except that a PBT having an intrinsic viscosity of 0.88 and a terminal carboxyl group concentration of 17 equivalents/ton was employed, and the extrudability was good.

As seen from Table 15, even when not only the flame retardant but also $Sb_2O_3$ was employed as the flame retardant aid, the flame retardant polyester resin composition had a higher flame retardancy and humid heat resistance than resin composition comprising PBT with a similar composition. Also, even when a PBT with lower terminal carboxyl group concentration is employed with an increased amount of the flame retardant, for an improvement of the flame retardancy and humid heat resistance, a sufficient improvement effect could not be obtained. From the above, it can be clearly seen that the flame retardant polyester resin composition of the present invention has an excellent flame retardance and humid heat resistance.

Table 15

| Content | | | Unit | Example 8 | Comp. Ex. 40 | Comp. Ex. 41 | Comp. Ex. 42 |
|---|---|---|---|---|---|---|---|
| Component | (A) Polymer | PBN | wt.% | 88.0 | - | - | - |
| | | PBT | " | - | 88.0 | 83.5 | 83.5 |
| | | Terminal COOH concentration | equivalent/ton | 40 | 42 | 42 | 17 |
| | (B) Brominated polystyrene | | wt.% | 8.0 | 8.0 | 11.0 | 11.0 |
| | (C) $Sb_2O_3$ | | " | 4.0 | 4.0 | 5.5 | 5.5 |
| Physical properties | Tensile strength | Before hot water deterioration | $kg/cm^2$ | 620 | 600 | 580 | 620 |
| | | After hot water deterioration | $kg/cm^2$ | 590 | 190 | 200 | 470 |
| | Combustibility test (UL-94) | | - | V-0 | V-2 | V-0 | V-0 |
| | Compound extrudability | | - | Good | Good | Good | Good |

Example 9

To a PBN having an intrinsic viscosity of 0.79 and a terminal carboxyl group concentration of 40 equivalents/ton was added a brominated polystyrene flame retardant having an average degree of polymerization of 880 in an amount of 8% by weight based on the total composition. Further, as the flame retardant aid, $Sb_2O_5$ was added in an amount of 5% by weight. After dry blending, the mixture was pelletized by extrusion through a single screw extruder, and showed a good extrudability. The other experiments were conducted in the same manner as in Example 7. The results are shown in Table 16.

Comparative Example 43

The tests were conducted in the same manner as in Example 9, except that a PBT having an intrinsic viscosity of 1.07 and a terminal carboxyl group concentration of 42 equivalents/ton was employed, and the extrudability was good.

Comparative Example 44

Because the flame retardancy was V-2 in Comparative Example 43, the flame retardant was added in an amount of 12% by weight and the flame retardant aid added in an amount of 6% by weight, to make it V-0. The remaining tests were conducted in the same manner as in Comparative Example 43, and the extrudability was found to be good.

Comparative Example 45

The tests were conducted in the same manner as in Comparative Example 44, except that a PBT having an intrinsic viscosity of 0.88 and a terminal carboxyl group concentration of 17 equivalents/ton was employed, and the extrudability was good.

From Table 16, it can be seen that, not only when using $Sb_2O_3$ as the flame retardant aid, but also when using $Sb_2O_5$ , the flame retardant polyester resin composition comprising the PBN of the present invention has a higher flame retardancy and humid heat resistance than the resin composition comprising the PBT with a similar composition. Also, even if the amount of the flame retardant is increased and a PBT with a lower terminal carboxyl group concentration employed, to improve the flame retardance and humid heat resistance, a sufficient improvement could not be obtained. From the above, it can be clearly seen that the flame retardant polyester resin composition has an excellent flame retardancy and humid heat resistance.

Table 16

| Content | | | Unit | Example 9 | Comp. Ex. 43 | Comp. Ex. 44 | Comp. Ex. 45 |
|---|---|---|---|---|---|---|---|
| Component | (A) Polymer | PBN | wt.% | 87.0 | - | - | - |
| | | PBT | " | - | 87.0 | 82.0 | 82.0 |
| | | Terminal COOH concentration | equivalent/ton | 40 | 42 | 42 | 17 |
| | (B) Brominated polystyrene | | wt.% | 8.0 | 8.0 | 12.0 | 12.0 |
| | (C) $Sb_2O_3$ | | " | 5.0 | 5.0 | 6.0 | 6.0 |
| Physical properties | Tensile strength | Before hot water deterioration | $kg/cm^2$ | 600 | 600 | 610 | 600 |
| | | After hot water deterioration | $kg/cm^2$ | 570 | 130 | 150 | 400 |
| | Combustibility test (UL-94) | | - | V-0 | V-2 | V-0 | V-0 |
| | Compound extrudability | | - | Good | Good | Good | Good |

Example 10

The tests were conducted in the same manner as in Example 9, except for using 5.5% by weight of $Sb_2O_5 \cdot 2H_2O$ as the flame retardant, and the extrudability was good. The results are shown in Table 17.

Example 11

The tests were conducted in the same manner as in Example 9, except for using 6% by weight of 0.5 $Na_2O \cdot Sb_2O_5$ as the flame retardant, and the extrudability was good.

Example 12

The tests were conducted in the same manner as in Example 9, except for using 6% by weight of 0.75 $Na_2O \cdot Sb_2O_5$ as the flame retardant, and the extrudability was good.

Example 13

The tests were conducted in the same manner as in Example 9, except for using 6.5% by weight of $Na_2O \cdot Sb_2O_5$ as the flame retardant, and the extrudability was good.

From Table 17, it can be understood that not only when $Sb_2O_5$ was employed, but also when a compound of $xNa_2O.Sb_2O_5 \cdot yH_2O$ (x = 0 - 1, y = 0 - 4) was employed, the flame retardant polyester resin composition has an excellent flame retardancy and humid heat resistance.

Table 17

| | | | Unit | Example 9 | Example 10 | Example 11 | Example 12 | Example 13 |
|---|---|---|---|---|---|---|---|---|
| Component | (A) Polymer | PBN | wt.% | 87.0 | 86.5 | 86.0 | 86.0 | 85.5 |
| | | Terminal COOH concentration | equivalent/ton | 40 | 40 | 40 | 40 | 40 |
| | (B) Brominated polystyrene | | wt.% | 8.0 | 8.0 | 8.0 | 8.0 | 8.0 |
| | (C) $xNa_2O \cdot Sb_2O_5 \cdot yH_2O$ x = 0 - 1, y = 0 - 4 | | " | $Sb_2O_5$ 5.0 | $Sb_2O_5 \cdot 2H_2O$ 5.5 | $0.5Na_2O \cdot Sb_2O_5$ 6.0 | $0.75Na_2O \cdot Sb_2O_5$ 6.0 | $Na_2O \cdot Sb_2O_5$ 6.5 |
| Physical properties | Tensile strength | Before hot water deterioration | $kg/cm^2$ | 590 | 580 | 580 | 570 | 590 |
| | | After hot water deterioration | $kg/cm^2$ | 550 | 550 | 540 | 530 | 550 |
| | Combustibility test (UL-94) | | - | V-0 | V-0 | V-0 | V-0 | V-0 |
| | Compound extrudability | | - | Good | Good | Good | Good | Good |

Example 14

To a PBN having an intrinsic viscosity of 0.79 and a terminal carboxyl group concentration of 40 equivalents/ton were added glass chopped strands with a diameter of 10 μm and a length of 3 mm in an amount of 30% by weight based on the total composition. A brominated polystyrene flame retardant having an average degree of polymerization of 880 was added in an amount of 6% by weight. Further, as the flame retardant aid, 3% by weight of $Sb_2O_3$ was added. After dry blending, the mixture was pelletized by extrusion through a single screw extruder, and showed a good extrudability. The other tests were conducted similarly as in Example 7. The results are shown in Table 18.

Comparative Example 46

The same tests were conducted in the same manner as in Example 14, except that a PBT having an intrinsic viscosity of 1.07 and a terminal carboxyl group concentration of 42 equivalents/ton was used, and the extrudability was good.

Comparative Example 47

Because the flame retardancy was V-2 in Comparative Example 46, the flame retardant was added in an amount of 9% by weight, and the flame retardant aid added in an amount of 4.5% by weight, to make it V-0. The remaining tests were conducted in the same manner as in Comparative Example 46, and the extrudability was formed to be good.

Comparative Example 48

The tests were conducted in the same manner as in Comparative Example 47, except that a PBT having an intrinsic viscosity of 0.88 and a terminal carboxyl group concentration of 17 equivalents/ton was employed, and the extrudability was good.

Comparative Example 49

The tests were conducted in the same manner as in Example 8 except that 55% by weight of glass fibers, 3% by weight of the flame retardant, and 2% by weight of the flame retardant aid were added, and the extrudability was found to be poor.

From Table 18, it can be understood that the flame retardant polyester resin composition comprising the PBN of the present invention has a higher flame retardancy and humid heat resistance than the resin composition comprising the PBT with a similar composition, even when glass fibers are used as the inorganic filler. Also, even when the amount of flame retardant added is increased and a PBT with a lower terminal carboxyl group concentration employed, to improve the flame retardancy and humid heat resistance, a sufficient improvement could not be obtained. From the above it is clear that the flame retardant polyester resin composition of the present invention has an excellent flame retardancy and hid heat resistance.

The amount of the glass fibers added must not be more than 50% by weight, as the extrudability will become poor when the glass fibers are added in an amount exceeding 50% by weight, as the inorganic filler.

**Table 18**

| | | | Content | Unit | Example 14 | Comp. Ex. 46 | Comp. Ex. 47 | Comp. Ex. 48 | Comp. Ex. 49 |
|---|---|---|---|---|---|---|---|---|---|
| Component | (A) Polymer | PBN | | wt.% | 61.0 | - | - | - | 40.0 |
| | | PBT | | " | - | 61.0 | 56.5 | 56.5 | - |
| | | Terminal COOH concentration | | equivalent/ton | 40 | 42 | 42 | 17 | 40 |
| | (B) Brominated polystyrene | | | wt.% | 6.0 | 6.0 | 9.0 | 9.0 | 3.0 |
| | (C) $Sb_2O_3$ | | | " | 3.0 | 3.0 | 4.5 | 4.5 | 2.0 |
| | (D) Glass fiber | | | " | 30.0 | 30.0 | 30.0 | 30.0 | 55.0 |
| Physical properties | Tensile strength | Before hot water deterioration | | $kg/cm^2$ | 1570 | 1540 | 1570 | 1580 | 2100 |
| | | After hot water deterioration | | $kg/cm^2$ | 1540 | 490 | 480 | 1180 | 1940 |
| | Combustibility test (UL-94) | | | - | V-0 | V-2 | V-0 | V-0 | V-0 |
| | Compound extrudability | | | - | Good | Good | Good | Good | Poor |

Example 15

To a PBN having an intrinsic viscosity of 0.79 and a terminal carboxyl group density of 40 equivalents/ton was added a brominated polystyrene flame retardant having an average degree of polymerization of 880 in an amount of 9% by weight based on the total composition. Further, as the flame retardant aid, 4.5% by weight of $Sb_2O_3$ was added. After dry blending, the mixture was pelletized by extrusion through a single screw extruder, and showed a good extrudability. The melt flow rate was measured under a load of 325 g, by using the pellets at 270°C. The other tests were conducted in the same manner as in Example 7. The results are shown in Table 19.

Comparative Example 50

The tests were conducted in the same manner as in Example 15, except for using 9% by weight of a brominated bisphenol A type polycarbonate as the flame retardant, and the extrudability was good.

As seen from Table 19, compared with when a brominated bisphenol A type polycarbonate is employed as the flame retardant, it was found that the flowability is higher when a brominate polystyrene is employed as in the present invention. Accordingly, the flame retardant polyester resin composition of the present invention has an excellent flame retardancy and humid heat resistance, and flowability, and is a composition particularly suitable for small thin parts.

**Table 19**

| | Content | | Unit | Example 15 | Comp. Ex. 50 |
|---|---|---|---|---|---|
| Component | (A) Polymer | PBN | wt.% | 86.5 | 86.5 |
| | | Terminal COOH concentration | equivalent/ton | 40 | 40 |
| | (B) Flame retardant | Brominated polystyrene | wt.% | 9.0 | - |
| | | Brominated polycarbonate | " | - | 9.0 |
| | (C) $Sb_2O_3$ | | " | 4.5 | 4.5 |
| Physical properties | Melt flow rate | | g/ | 10.1 | 4.6 |
| | Tensile strength | Before hot water deterioration | $kg/cm^2$ | 600 | 610 |
| | | After hot water deterioration | $kg/cm^2$ | 570 | 580 |
| | Combustibility test (UL-94) | | - | V-0 | V-0 |
| | Compound extrudability | | - | Good | Good |

Examples 16 - 19

To a PBN having an intrinsic viscosity of 0.79 and a terminal carboxyl group concentration [COOH] = 40 eq./ton was added a flame retardant shown in Table 20 in an amount of 6-9% by weight based on the total composition, and after dry blending, the mixture was pelletized by extrusion by a single screw extruder and showed a good extrudability. Further, the pellets were injection molded to prepare test pieces for a tensile test, and subjected to a hot water deterioration test. Also, test pieces for a combustion test were prepared and subjected to a combustion test.

The results are shown in Table 20.

Table 20

| | | Content | Unit | Example 16 | Example 17 | Example 18 | Example 19 |
|---|---|---|---|---|---|---|---|
| Component | (A) Polymer | PBN | wt.% | 88.0 | 88.0 | 86.5 | 91.0 |
| | | Terminal COOH concentration | equivalent/ton | 40 | 40 | 40 | 40 |
| | (B) Flame retardant | Brominated diphenyl ether | wt.% | 8.0 | - | - | - |
| | | Brominated polycarbonate | " | - | 8.0 | 9.0 | - |
| | | Brominated imide | " | - | - | - | 6.0 |
| | (C) $Sb_2O_3$ | | " | 4.0 | 4.0 | 4.5 | 3.0 |
| Physical properties | Impact strength (1/8", without notch) | | kg·cm/cm | 84 | 51 | 45 | 80 |
| | Tensile strength | Before hot water deterioration | $kg/cm^2$ | 670 | 640 | 610 | 640 |
| | | After hot water deterioration | $kg/cm^2$ | 640 | 600 | 580 | 620 |
| | Combustibility test (UL-94) | | - | V-0 | V-2 | V-0 | V-0 |
| | Compound extrudability | | - | Good | Good | Good | Good |

Example 20

To a PBN having an intrinsic viscosity of 0.79 and a terminal carboxy group concentration of 40 equivalents/ton were added a flamed retardant shown in Table 21 in an amount of 0.3% by weight or 1.0% by weight, based on the total composition, and $Sb_2O_3$ in the half concentration of the flame retardant (i.e., 0.15% by weight or 0.5% by weight), and after dry blending, the mixture was pelletized by extrusion by a single screw extrudes. Test pieces for a flame retardant test (i.e., a combustion test) and subjected to a combustion test. The results are shown in Table 21.

Table 21

| Flame retardant | Amount added | |
|---|---|---|
| | 0.3 wt% | 1.0 wt% |
| Brominated polycarbonate retardant used in bisphenol A type Example 1 | HB | V-2 |
| Brominated epoxy retardant used in Example 5 | HB | V-2 |
| Brominated polystyrene retardant used in Example 7 | HB | V-2 |

## Claims

1. A flame retardant polyester resin composition comprising:
(A) 30 to 99.5% by weight of a polybutylene naphthalene dicarboxylate;
(B) 0.5 to 25% by weight of at least one flame retardant selected from the group consisting of brominated bisphenol A type polycarbonate flame retardants, brominated epoxy flame retardants and brominated polystyrene flame retardants, brominated diphenyl ether flame retardants, and brominated imide flame retardants;
(C) 0 to 15% by weight of at least one flame retardant aid selected from the group consisting of $Sb_2O_3$ , $Sb_2O_5 \cdot nH_2O$ (n = 0 - 4) and $xNa_2O \cdot Sb_2O_5 \cdot yH_2O$ (x = 0 - 1, y = 0 - 4); and
(D) 0 to 50% by weight of an inorganic filler.

2. A flame retardant polyester resin composition as claimed in claim 1, wherein the polybutylene naphthalene dicarboxylate is polybutylene-2,6-naphthalene dicarboxylate.

3. A flame retardant polyester composition as claimed in claim 1, wherein the flame retardant is at least one brominated bisphenol A type polycarbonate flame retardant having the formulae (I), (II) and (III):

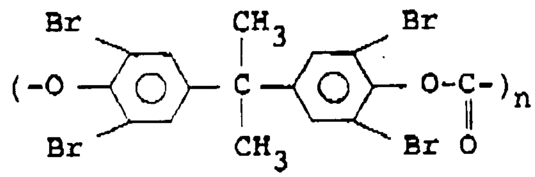

(n = 2 - 30)

(I)

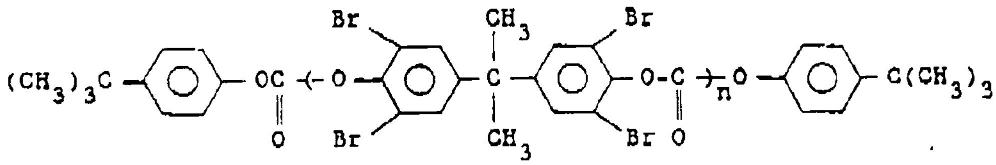

(n = 2 - 30) (II)

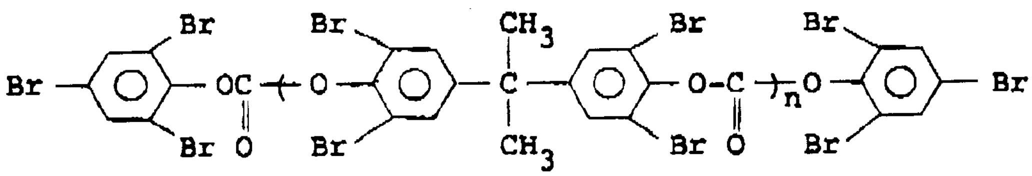

(n = 2 - 30) (III)

4. A flame retardant polyester resin composition as claimed in claim 1, wherein the flame retardant is at least one brominated epoxy flame retardant having the formula (IV):

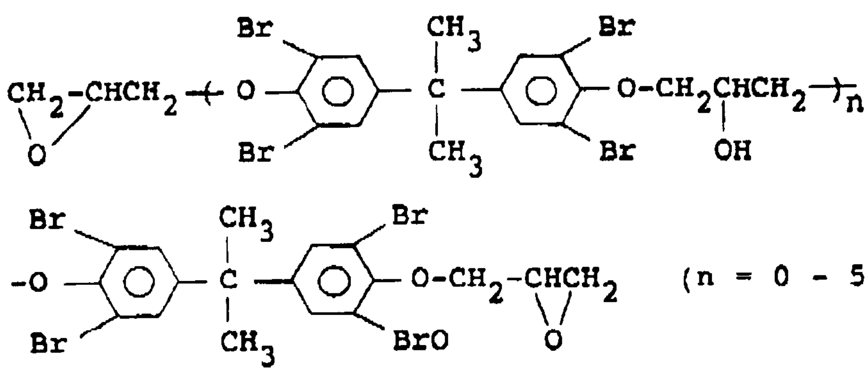

(n = 0 - 50)

(IV)

5. A flame retardant polyester resin composition as claimed in claim 1, wherein the flame retardant is at least one brominated polystyrene flame retardant having the formula (V):

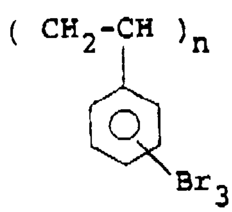

(n = 5 - 300) (V)